# EUROPEAN PATENT SPECIFICATION

(11) **EP 1 747 669 B1**
(45) Date of publication and mention of the grant of the patent: **29.07.2009**
(21) Application number: 04752185.1
(22) Date of filing: 14.05.2004
(51) Int. Cl.: H04N 5/50

(54) **AUTOMATIC CHANNEL SEARCH SYSTEM AND METHOD**
AUTOMATISCHES KANALSUCHSYSTEM UND VERFAHREN
SYSTEME ET PROCEDE DE RECHERCHE AUTOMATIQUE DE CANAUX

(43) Date of publication of application: 31.01.2007
(73) Proprietor: Thomson Licensing, 92100 Boulogne-Billancourt (FR)
(72) Inventor: SCHULTZ, Mark, Alan, Carmel, IN 46033 (US); LAMB, Matthew, Robert, Westfield, IN 46074 (US)
(74) Representative: Domenego, Bertrand
(86) International application number: PCT/US2004/015104
(87) International publication number: WO 2005/117426

(56) References cited:
- WO-A-01/74064
- US-A- 4 079 419
- US-A1- 2003 101 453
- US-B1- 6 337 719
- US-B1- 6 337 719
- US-B1- 6 721 018

## Description

### FIELD OF THE INVENTION

The present invention generally relates to systems and methods for television channel configuration setup, and more particularly to providing an automatic channel search and setup that does not interfere with television viewing.

### BACKGROUND OF THE INVENTION

Television systems may include a plurality of different input configurations. When a television is purchased moved or reconfigured, it is often necessarily to program the television channels. This may be performed by doing a channel search. Televisions need to have an auto-program or channel search algorithm run when a set is being set up for the first time.

With today's designs, this can take, for example, 5-20 minutes to find all channels in every configuration. Every television set requires this to be run while someone is watching the program run. This becomes impractical and an inefficient use of the consumer's time.

Accordingly, there is a need for having a channel search routine, which does not Interfere with television viewing of a consumer.

US 2003/0101453 discloses a digital broadcasting receiver which may be configured so that a channel search is made when a set date/time of execution has arrived. Various types of data may be automatically updated even if a user does not specially issue a command to the receiver. When the set date has arrived, the automatic channel search process judges whether or not the receiver (television) is on. The power supply is turned on if the power to the receiver is not already on (e.g., if it is in a stand-by mode). Then, channel search processing is performed. If the receiver is on, the CPU waits until the power is off to proceed to channel search processing. That is, the start of a channel search is delayed until the power supply is off, so as to not interrupt if a user is viewing a program when the receiver is on.

WO 01/74064 discloses a system for updating transmitter data stored in a preset channel memory. Such updating is exercised by the processing unit being programmed to regularly run an automatic channel update algorithm for updating the channel memory by controlling the tuner to scan a video input signal for transmitter stations. The processing unit compares transmitter data (e.g. frequency or channel number) of a transmitter station found with the transmitter data stored in the channel memory wherein in the case of no match of transmitter data, the processing unit updates the channel memory either automatically or through a user interface program.

With the above goal in mind it is an object of the present invention to provide a television system according to claim 1 and a method for channel searching for a television according to claim 10.

Other features of the invention are found in the dependent claims.

### SUMMARY OF THE INVENTION

A television system is provided which is defined by claim 1. A television includes an off mode and a normal viewing mode. The television has a setup module responsive to a trigger event. The setup module automatically searches a channel listing from an input signal to provide channel assignments for the television system independently of user supervision. This is provided in such a way that an automatic channel search is performed when the television is in the off mode or is run in the background so that the user is unaware of the automatic channel search during viewing mode.

A method for channel searching for a television includes providing a television having a setup module, the television having an off mode and a normal viewing mode. Responsive to a trigger event, automatic searching a channel listing is provided from an input signal to provide channel assignments for the television system independently of user supervision wherein the searching is performed when the television is in the off mode or is run in the background so that the user is unaware of the searching during viewing mode.

### BRIEF DESCRIPTION OF THE DRAWINGS

The advantages, nature, and various additional features of the invention will appear more fully upon consideration of the illustrative embodiments now to be described in detail in connection with accompanying drawings wherein:
Fig. 1 is an exemplary television system architecture, which includes a tuning/setup module capable of providing channel searching when the television is in the off mode or is run in the background so that the user is unaware of the searching during a viewing mode, in accordance with an embodiment of the present invention; and
Fig. 2 is a block/flow diagram for channel searching in accordance with exemplary embodiments of the present invention.

It should be understood that the drawings are for purposes of illustrating the concepts of the invention and are not necessarily the only possible configuration for illustrating the invention.

### DETAILED DESCRIPTION OF THE INVENTION

The present invention provides a new and useful system and method for enabling a channel search for televisions, which does not interfere with television viewing. A channel search includes scanning inputs to a television set to determine which channels are available from an input or at a given location. These channels are then stored/assigned within the system to permit viewing access to the channels.

Channel searches are enabled to be performed immediately following the set being plugged into the wall without the user having to enable a channel search. In this instance, the television display does not have to be on to complete the channel search. Instead, the television could perform the search in an "off" mode.

The television display is enabled to show a television program while the channel search is running in the background and not be visible or apparent to the viewer. In particularly useful embodiments, instead of requiring the owner of a TV to enable a channel search when he/she plugs in a new set, the present invention automatically starts a channel search upon plug-in or other triggering event so at least some if not all channels are available by the time the owner is ready to try to view a channel. If a channel is requested during the automatic search, the search can be stopped and the requested channel displayed until the set is turned off. At this point, the television continues the search from where it left off.

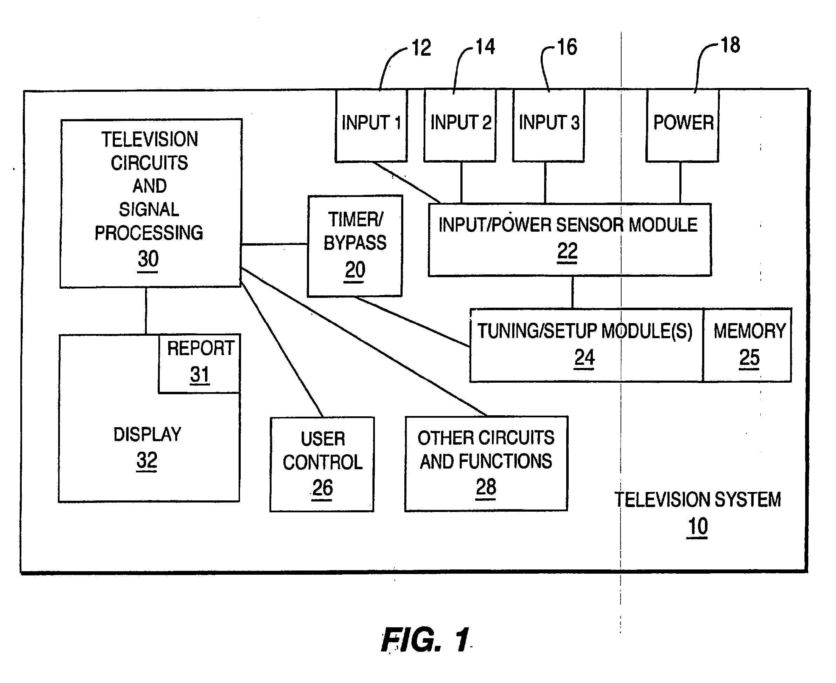

Periodically, for example, each day, week, month or other preselected amount of time, the set starts a new tuning search to see if the present channel list is correct. If it is not correct, the automatic routine could add channels but does not remove channels in case the cable or satellite is turned off when the television is turned off. These automatic features could be turned off or partially inactivated by the consumer if they so desire to preserve the present setup. It should be understood that the elements shown in the FIGS. may be implemented in various forms of hardware, software or combinations thereof. Preferably, these elements are implemented in a combination of hardware and software on one or more appropriately programmed general-purpose digital computers having a processor and memory and input/output interfaces. Referring now to the drawings in which like numerals represent the same or similar elements and initially to FIG. 1, a system 10 for automatic channel tuning is shown in accordance with one illustrative embodiment. System 10 includes a television system, which may include all of the functions and capabilities of the prior art. System 10 includes a receiver 30, which includes circuitry and signal processing capabilities for receiving an input signal and processing the signal to be viewed on a display 32. Display 32 may include one or more of a cathode ray tube (CRT), liquid crystal display (LCD), plasma, or any other display technology. System 10 may include one or more inputs 12-16. These inputs 12-16 may be adapted to receive input signals from cable, satellite, wireless broadcasts, VCR/DVD players or any other input signal or input device. System 10 may work in a plurality of different tuning/setup modes.

System 10 includes an input/power sensing module 22, which senses one of power 18 or an input signal 12-16 to initiate a tuning/setup procedure implemented by a tuning/setup module 24. In one example, a television set is plugged in, module 24 is powered up and awaits an input signal from one or more inputs 12-16. When the input signal is present a channel scan is performed to set up channel assignments within system 10. This procedure may be performed even while the television is off. Alternately, the procedure can be run simultaneously while a viewer watches television.

Module 22 assigns available stations from inputs 12-16 to channels automatically without the need for viewer supervision. Upon set up of a television, sensor module 22 triggers tuning/setup module 24 to begin channel assignments through a timer/bypass 20. Timer/bypass 20 controls access to tuning/setup module 24. In this way, tuning/setup module 24 is operational at startup or at predetermined times. For example, after module 24 programs channel assignments, bypass 20 disables module 24 to prevent reinitiating thereof. In addition, module 24 will not consume power. After timer 20 measures a periodic lapse of time, module 24 is triggered and becomes operational to add new channels or to reassign channels based upon input signals received on inputs 12-16.

In some embodiments, the elapsed time may include a day, week, month or other preselected amount of time. Module 24 starts a new tuning search to see if the present channel list is correct when prompted by timer 20. If the channel list is not correct, the automatic routine may add channels or adjust channels. Module 24 does not remove channels in case cable or satellite inputs are turned off when the television is turned off. These automatic features could be turned off or partially inactivated by the consumer if they so desire to preserve the present setup. In the event that the inputs are off when the timer 20 activates module 24, sensor module 22 senses the inactive input and only permits new channels to be added, which do not erase or delete the channels associated with the inactive input. For example, if channel X is associated with cable and the cable is disconnected according to module 22, then channel X could not be reassigned. However, if channel X+2 was previously available (no associated channel) and a satellite input indicates X+2 as a new channel, X+2 would be assigned and associated with satellite. Other, schemes may also be employed for programming/assigning channels.

System 10 includes a user control feature 26 which operates in accordance with existing user interfaces to program timer/bypass 20, provide a manual override of module 24 to permit user channel assignment and permit viewer television usage even during tuning/setup during operation of module 24.

Channel searches are enabled to be performed immediately following the set being plugged into the wall without the user having to enable a channel search even when the television is in an "off" mode. The television display is also enabled to show a television program while the channel search is running in the background and not visible or apparent to the viewer. In particularly useful embodiments, instead of requiring the owner of a TV to enable a channel search when he plugs in a new set, tuning/setup module 24 automatically starts a channel search upon plug-in or other triggering event so at least some if not all channels are available by the time the owner is ready to try to view a channel. If a user requests a channel during the automatic search, the search can be stopped and the requested channel or channels displayed until the set is turned off. At this point, the television continues the search from where it left off by storing the last searched channel information in a memory 25.

While the present invention has been illustratively described in terms of system 10, the present invention is broader and may include other options or features by providing circuits and software 28 to perform such operations. For example, circuits 28 may include an onscreen status report 31. The status report 31 can be generated automatically or at the prompting of a user using an acceptable user interface, e.g., a remote control and/or interface 26. The status report 31 may include information such as, when the last channel search was performed, the last channel to be searched (if the channel such was interrupted), time until the next such, information about newly discovered channels, etc.

In an alternate embodiment, module 24 may include two or more tuners (modules 24). If multiple tuners are present, one tuner may be dedicated to setting up or finding new channels or channel assignments, while a second tuner is employed to permit a user to view television programs. The tuner module 24 used for finding new channels would be activated in accordance with timer 20. Otherwise, this tuner could be deactivated during normal operations of system 10.

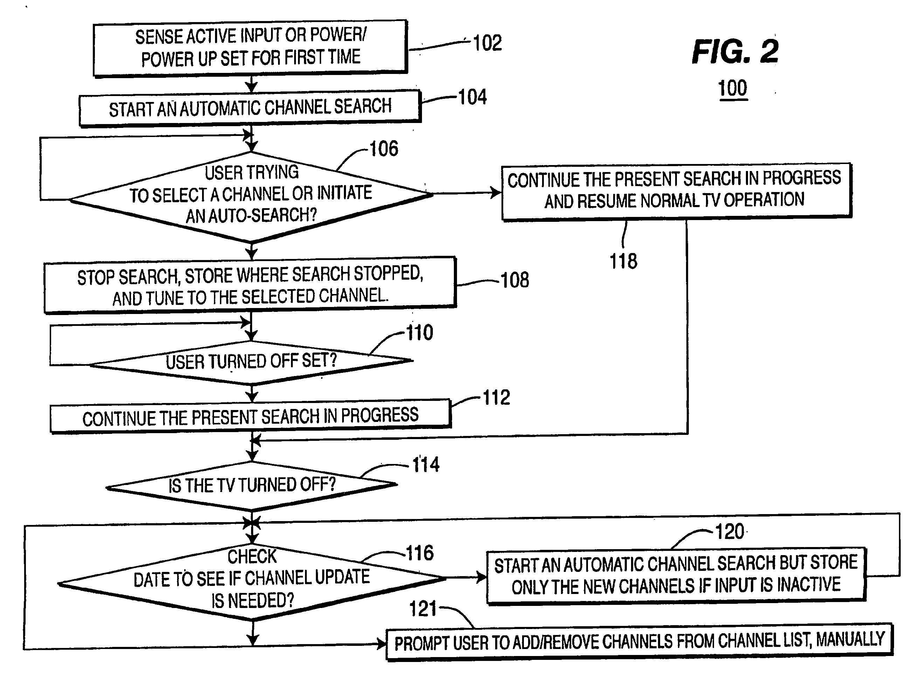

Referring to FIG. 2, a block/flow diagram shows an illustrative system/method 100 for performing a channel search in accordance with one embodiment of the present invention. The steps may be performed at different times and an inventive method need not include all steps. For example, an automatic channel search may not be performed at all or may be performed only at start up. In block 102, a new television set is powered up for the first time. Upon startup an automatic channel search (auto-search) is performed whether the television is on or off, in block 104. In block 106, a determination is made as to whether the user is attempting to select a channel or if the user is attempting to manually initiate an auto-search. If the user is attempting to initiate and auto-search, the auto-search initiated in block 104 is continued in block 118 until complete, in the meanwhile, normal television viewing can commence or proceed without the user knowing that the auto-search is running in the background. If the user is selecting a channel, then in block 108, the auto-search is temporarily stopped, the location (channel sequence) where the search was stopped is stored and the television is tuned to the selected channel or channels. Otherwise, in block 106 the query remains open and is intermittently tested (using e.g., timer 20 shown in FIG. 1) while the auto-search is running to determine if a channel or manual auto-search has been selected.

In the event a channel has been selected for viewing, a check is made as to the status of the television set in block 110. If the set is on, block 110 checks the status intermittently (using e.g., timer 20 shown in FIG. 1) until the set is turned off. When the set is turned off, the auto-search previously halted is recommenced and preferably completed in block 112.

After a predetermined elapsed time, as programmed or provided for in timer 20, a check is performed to determine whether the television is off in block 114 to prepare for an update check in block 116. Block 114 is optional as an update check may be performed while the television is in normal use.

In block 116, a date or time check is made to determine if an update is needed. If an update is not needed, block 116 is checked intermittently (using e.g., timer 20 shown in FIG. 1) to see if an update is needed. If an update is needed, an auto-search is commenced in block 120. Update auto-searches preferably only add channels for a given type of input when the input of that type is disconnected. However, channels can be updated if inputs are active (e.g., add, remove or reassign channels). In this way, the system can be assured that no channels are lost from that input type.

In block 121, a user selectable feature may be implemented, which permits the user to manually select or deselect a given channel. When the channel is selected/deselected by the user, the channel is added/removed to/from a channel list. This feature is particularly useful when a user wishes to add/delete specific channels from the list. This feature may be selectable from an options menu, which are normally provided in television systems. This feature may be employed during a search and provide an automatic query for a given new channel, a channel of a certain type, e.g., pay-per-view, adult, music video etc. These options are preferably user-selectable before or during a search.

Although the embodiment which incorporates the teachings of the present invention has been shown and described in detail herein, those skilled in the art can readily devise many other varied embodiments that still incorporate these teachings.

## Claims

1. A television system comprising:
a television (10) having an off mode and a normal viewing mode;
the television including a setup module (24) responsive to a trigger event, including an active input signal from one or more television system inputs, the setup module configured to perform an automatic channel search of a channel listing by automatically scanning the Input signal to provide channel assignments for the television system independent of user supervision, **characterized in that** the setup module is enabled to perform said automatic channel search simultaneously during said normal television viewing mode, and to perform said automatic channel search in the background so that the user is unaware of the automatic channel search during said normal viewing mode; and the setup module is further configured to enable the automatic channel search to be performed immediately upon plug-in of the television set even when the television is in the off mode; and a sensor module (22), which senses an active input signal from said one or more television system inputs and wherein if an input is disconnected, the sensor modules senses the inactive input signal and only permits new channels to be added which do not erase or delete the channels associated with the inactive input signal.

2. The television system as recited in claim 1, wherein the sensor module (22) senses a power connection and wherein the trigger event includes sensing the power connection.

3. The television system as recited in claim 1, further comprising a timer (20), which measures elapsed time and compares the elapsed time to an update time and wherein the trigger event includes the elapsed time exceeding the update time.

4. The television system as recited in claim 1, wherein in normal viewing mode, the automatic channel search is stopped to permit viewing and the setup module (24) further comprising a memory (25) which stores a location in the channel listing where the channel search was stopped.

5. The television system as recited in claim 4, wherein the search is continued from the stored location in the channel listing and wherein the trigger event includes the television being placed in the off mode.

6. The television system as recited in claim 1, further comprising a user interface (26), which permits a user-initiated channel search.

7. The television system as recited in claim 1, further comprising an onscreen status report (31), which provides automatic channel search status.

8. A method for channel searching for a television, comprising the steps of:
providing (10) a television having a setup module (24), the television having an off mode and a normal viewing mode; and responsive to a trigger event, said trigger event including an active input signal from one or more television system inputs, performing an automatic channel search of a channel listing by scanning the active input signal to provide channel assignments for the television system independent of user supervision, **characterized in that** it further comprises at least one of performing the searching simultaneously during the normal viewing mode, wherein said searching is run in the background so that the user is unaware of the searching during said normal viewing mode and for performing an automatic channel search immediately upon plug-in of the television set even when the television is in the off mode; and
sensing (120) an inactive input signal from said one or more television system inputs and permitting only new channels to be added which do not erase or delete the channels associated with the inactive input signal.

9. The method as recited in claim 8, further comprising the step of sensing (22) a power connection to provide the trigger event.

10. The method as recited in claim 8, further comprising the step measuring (116) elapsed time to compare the elapsed time to an update time such that the trigger event includes the elapsed time exceeding the update time.

11. The method as recited in claim 8, further comprising the step of in normal viewing mode, stopping (108) the automatic channel search to permit television viewing and storing a location in the channel listing where the channel search was stopped.

12. The method as recited in claim 11, wherein the search is continued from the stored location in the channel listing and wherein the trigger event includes the television being placed in the off mode.

13. The method as recited in claim 8, further comprising a user interface (26), and wherein the method includes providing (106) a user-initiated channel search.

14. The method as recited in claim 8, further comprising the step of providing (31) an onscreen status report, which provides an automatic channel search status.

15. The television system of claim 1, wherein the automatic channel search is enabled to be performed when the television is in the off mode.

16. The method of claim 8, wherein the searching is enabled to be performed when the television is in the off mode.

## Patentansprüche

1. Fernsehsystem, aufweisend:
einen Fernseher (10), der einen Ausschaltmodus und einen normalen Betrachtungs-Modus aufweist;
wobei der Fernseher ein Konfigurations-Modul (24), das auf ein Auslöseereignis reagiert, das ein aktives Eingangssignal von einem oder mehr Fernsehsystemeingängen enthält, wobei das Konfigurations-Modul dazu eingerichtet ist, eine automatische Kanalsuche einer Kanalliste durch automatisches Abtasten des Eingangssignals durchzuführen, um Kanal-Zuweisungen für das Fernsehsystem unabhängig von der Benutzerkontrolle zu liefern, **dadurch gekennzeichnet, dass** das Konfigurations-Modul in die Lage versetzt ist, die automatische Kanalsuche gleichzeitig während des normalen Fernseh-Betrachtungs-Modus durchzuführen und die automatische Kanalsuche im Hintergrund durchzuführen, so dass der Benutzer die automatische Kanalsuche während des normalen Betrachtungs-Modus nicht bemerkt; und wobei das Konfigurations-Modul ferner dazu eingerichtet ist, zu ermöglichen, dass die automatische Kanalsuche unmittelbar auf das Anschließen des Fernsehers durchgeführt wird, sogar wenn sich der Fernseher im Ausschaltmodus befindet; und ein Sensormodul (22) aufweist, welches ein aktives Eingangssignal von dem einen oder mehr Fernsehsystemeingängen wahrnimmt, und wobei, wenn ein Eingang ausgeschaltet wird, das Sensormodul das inaktive Eingangssignal wahrnimmt und neuen Kanälen nur erlaubt, hinzugefügt zu werden, welche die Kanäle, die mit dem inaktiven Eingangssignal verknüpft sind, nicht löschen oder entfernen.

2. Fernsehsystem nach Anspruch 1, wobei das Sensormodul (22) einen Netzanschluss wahrnimmt und wobei das Auslöseereignis das Wahrnehmen des Netzanschlusses aufweist.

3. Fernsehsystem nach Anspruch 1, ferner aufweisend einen Zeitmesser (20), welcher die verstrichene Zeit misst und die verstrichene Zeit mit einer Aktualisierungszeit vergleicht, und wobei das Auslöseereignis die verstrichene Zeit enthält, welche die Aktualisierungszeit übersteigt.

4. Fernsehsystem nach Anspruch 1, wobei im normalen Betrachtungs-Modus die automatische Kanalsuche gestoppt wird, um das Betrachten zu erlauben, und das Konfigurations-Modul (24) ferner einen Speicher (25) aufweist, der eine Position in der Kanalliste speichert, an der die Kanalsuche gestoppt wurde.

5. Fernsehsystem nach Anspruch 4, wobei die Suche von der gespeicherten Position in der Kanalliste aus fortgesetzt wird und wobei das Auslöseereignis enthält, dass der Fernseher in den Ausschaltmodus versetzt wird.

6. Fernsehsystem nach Anspruch 1, ferner aufweisend eine Benutzerschnittstelle (26), welche eine vom Benutzer ausgelöste Kanalsuche erlaubt.

7. Fernsehsystem nach Anspruch 1, ferner aufweisend eine Bildschirmstatusmeldung (31), welche den Stand der automatischen Kanalsuche liefert.

8. Verfahren zum Kanalsuchen für einen Fernseher, aufweisend die Schritte:
Bereitstellen (10) eines Fernsehers, der ein Konfigurations-Modul (24) aufweist, wobei der Fernseher einen Ausschaltmodus und einen normalen Betrachtungs-Modus aufweist; und reagierend auf ein Auslöseereignis, wobei das Auslöseereignis ein aktives Eingangssignal von einem oder mehr Fernsehsystemeingängen aufweist, Durchführen einer automatischen Kanalsuche einer Kanalliste durch Abtasten des aktiven Eingangssignals, um Kanal-Zuweisungen für das Fernsehsystem unabhängig von einer Benutzerkontrolle bereitzustellen, **dadurch gekennzeichnet, dass** es ferner mindestens eines aufweist aus dem Durchführen der automatischen Kanalsuche gleichzeitig während des normalen Betrachtungs-Modus, wobei das Suchen im Hintergrund läuft, so dass der Benutzer die Suche während des normalen Betrachtungs-Modus nicht bemerkt, und aus dem Durchführen einer automatischen Kanalsuche unmittelbar auf ein Anschließen des Fernsehers sogar, wenn sich der Fernseher im Ausschaltmodus befindet; und
Abtasten (120) eines inaktiven Eingangssignals von dem einen oder mehr Fernsehsystemeingängen und Erlauben, dass nur neue Kanäle hinzugefügt werden, welche die Kanäle, die mit dem inaktiven Eingangssignal verknüpft sind, nicht löschen oder entfernen.

9. Verfahren nach Anspruch 8, ferner aufweisend den Schritt (22) des Abtastens eines Netzanschlusses, um das Auslöseereignis zu liefern.

10. Verfahren nach Anspruch 8, ferner aufweisend das schrittweise Messen (116) von verstrichener Zeit, um die verstrichene Zeit mit einer Aktualisierungszeit zu vergleichen, so dass das Auslöseereignis eine verstrichene Zeit enthält, die die Aktualisierungszeit übersteigt.

11. Verfahren nach Anspruch 8, ferner aufweisend den Schritt (108) des Stoppens der automatischen Kanalsuche im normalen Betrachtungs-Modus, um das Fernsehen und das Speichern einer Position des Kanals in der Kanalliste, an der die Kanalsuche gestoppt wurde, zu erlauben.

12. Verfahren nach Anspruch 11, wobei die Suche von der gespeicherten Position in der Kanalliste aus fortgesetzt wird, und wobei das Auslöseereignis enthält, dass der Fernseher in den Ausschaltmodus versetzt wird.

13. Verfahren nach Anspruch 8, ferner aufweisend eine Benutzerschnittstelle (26), und wobei das Verfahren das Bereitstellen (106) einer vom Benutzer ausgelösten Kanalsuche aufweist.

14. Verfahren nach Anspruch 8, ferner aufweisend den Schritt (31) des Lieferns einer Bildschirmstatusmeldung, welche den Stand der automatischen Kanalsuche liefert.

15. Fernsehsystem nach Anspruch 1, wobei die automatische Kanalsuche durchgeführt werden kann, wenn sich der Fernseher im Ausschaltmodus befindet.

16. Verfahren nach Anspruch 8, wobei das Suchen durchgeführt werden kann, wenn sich der Fernseher im Ausschaltmodus befindet.

## Revendications

1. Système de téléviseur comprenant :
un téléviseur (10) comportant un mode d'arrêt et un mode de visualisation normal ;
le téléviseur comprenant un module de paramétrage (24) réactif à un événement déclencheur, comprenant un signal d'entrée actif provenant d'une ou plusieurs entrées du système de téléviseur, le module de paramétrage étant configuré pour réaliser une recherche automatique de chaîne d'une liste de chaînes en balayant automatiquement le signal d'entrée pour fournir des affectations de chaîne pour le système de téléviseur indépendamment du contrôle de l'utilisateur, **caractérisé en ce que** le module de paramétrage est activé pour réaliser ladite recherche automatique de chaîne simultanément pendant ledit mode de visualisation normal du téléviseur, et pour réaliser ladite recherche automatique de chaîne en arrière-plan de telle sorte que l'utilisateur ne soit pas conscient de la recherche automatique de chaîne pendant ledit mode de visualisation normal ; et le module de paramétrage est également configuré pour permettre de réaliser la recherche automatique de chaîne immédiatement lors du branchement du poste de téléviseur même quand le téléviseur est dans le mode d'arrêt ; et un module de capteur (22), qui détecte un signal d'entrée actif provenant desdites une ou plusieurs entrées du système de téléviseur et dans lequel si une entrée est déconnectée, le module de capteur détecte le signal d'entrée inactif et permet uniquement d'ajouter les nouvelles chaînes, ce qui n'efface pas les chaînes associées au signal d'entrée inactif.

2. Système de téléviseur selon la revendication 1, dans lequel le module de capteur (22) détecte un raccordement électrique et dans lequel l'événement déclencheur comprend la détection du raccordement électrique.

3. Système de téléviseur selon la revendication 1, comprenant également un temporisateur (20), qui mesure le temps écoulé et compare le temps écoulé à un temps d'actualisation et dans lequel l'événement déclencheur comprend le dépassement du temps d'actualisation par le temps écoulé.

4. Système de téléviseur selon la revendication 1, dans lequel dans le mode de visualisation normal, la recherche automatique de chaîne est arrêtée pour permettre la visualisation et le module de paramétrage (24) comprend également une mémoire (25) qui enregistre un emplacement dans la liste de chaînes auquel la recherche de chaînes a été arrêtée.

5. Système de téléviseur selon la revendication 4, dans lequel la recherche est continuée à partir de l'emplacement enregistré dans la liste de chaînes et dans lequel l'événement déclencheur comprend le placement du téléviseur dans le mode d'arrêt.

6. Système de téléviseur selon la revendication 1, comprenant également une interface utilisateur (26) qui permet une recherche de chaîne initiée par l'utilisateur.

7. Système de téléviseur selon la revendication 1, comprenant également un rapport d'état à l'écran (31) qui fournit l'état de la recherche automatique de chaîne.

8. Procédé de recherche de chaîne pour un téléviseur, comprenant les étapes consistant à :
fournir (10) un téléviseur comportant un module de paramétrage (24), le téléviseur comportant un mode d'arrêt et un mode de visualisation normal ; et réactif à un événement déclencheur, ledit événement déclencheur comprenant un signal d'entrée actif provenant d'une ou plusieurs entrées du système de téléviseur, réaliser une recherche automatique de chaîne d'une liste de chaînes en balayant le signal d'entrée actif pour fournir des affectations de chaîne pour le système de téléviseur indépendant du contrôle de l'utilisateur, **caractérisé en ce qu'**il comprend également au moins l'un de la réalisation de la recherche simultanément pendant le mode de visualisation normal, dans lequel ladite recherche est réalisée en arrière-plan de telle sorte que l'utilisateur ne soit pas conscient de la recherche pendant ledit mode de visualisation normal et pour réaliser une recherche automatique de chaîne immédiatement au branchement du poste de téléviseur même quand le téléviseur est dans le mode d'arrêt ; et
détecter (120) un signal d'entrée inactif depuis lesdites une ou plusieurs entrées du système de téléviseur et permettre d'ajouter seulement les nouvelles chaînes sans effacer les chaînes associées au signal d'entrée inactif.

9. Procédé selon la revendication 8, comprenant également l'étape de détection (22) d'un raccordement électrique pour fournir l'événement déclencheur.

10. Procédé selon la revendication 8, comprenant également l'étape de mesure (116) du temps écoulé pour comparer le temps écoulé à un temps d'actualisation de telle sorte que l'événement déclencheur comprenne le dépassement du temps d'actualisation par le temps écoulé.

11. Procédé selon la revendication 8, comprenant également l'étape dans le mode de visualisation normal d'arrêt (108) de la recherche automatique de chaîne pour permettre la visualisation du téléviseur et l'enregistrement d'un emplacement dans la liste de chaînes auquel la recherche de chaîne a été arrêtée.

12. Procédé selon la revendication 11, dans lequel la recherche est continuée depuis l'emplacement enregistré dans la liste de chaînes et dans lequel l'événement déclencheur comprend le placement du téléviseur dans le mode d'arrêt.

13. Procédé selon la revendication 8, comprenant également une interface utilisateur (26), et dans lequel le procédé comprend la fourniture (106) d'une recherche de chaîne initiée par l'utilisateur.

14. Procédé selon la revendication 8, comprenant également l'étape de fourniture (31) d'un rapport d'état à l'écran, qui fournit un état de la recherche automatique de chaîne.

15. Système de téléviseur selon la revendication 1, dans lequel la recherche automatique de chaîne est activée pour être réalisée quand le téléviseur est dans le mode d'arrêt.

16. Procédé selon la revendication 8, dans lequel la recherche est activée pour être réalisée quand le téléviseur est dans le mode d'arrêt.
